(19) Europäisches Patentamt / European Patent Office / Office européen des brevets

(11) **EP 3 265 748 B1**

(12) **EUROPÄISCHE PATENTSCHRIFT**

(45) Veröffentlichungstag und Bekanntmachung des Hinweises auf die Patenterteilung:
**15.07.2020 Patentblatt 2020/29**

(21) Anmeldenummer: **16707413.7**

(22) Anmeldetag: **26.02.2016**

(51) Int Cl.:
**G01B 11/06** (2006.01)  **G01N 21/3581** (2014.01)

(86) Internationale Anmeldenummer:
**PCT/EP2016/054162**

(87) Internationale Veröffentlichungsnummer:
**WO 2016/139155 (09.09.2016 Gazette 2016/36)**

(54) **VORRICHTUNG UND VERFAHREN ZUM MESSEN DER WANDDICKE EINES ROHRS**

DEVICE AND METHOD FOR MEASURING THE WALL THICKNESS OF A TUBE

DISPOSITIF ET PROCÉDÉ DE MESURE DE L'ÉPAISSEUR DE PAROI D'UN TUBE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.03.2015 DE 102015103063**
**25.09.2015 DE 102015116234**

(43) Veröffentlichungstag der Anmeldung:
**10.01.2018 Patentblatt 2018/02**

(73) Patentinhaber: **SIKORA AG**
**28307 Bremen (DE)**

(72) Erfinder: **SIKORA, Harald**
**28357 Bremen (DE)**

(74) Vertreter: **Hauck Patentanwaltspartnerschaft mbB**
**Postfach 11 31 53**
**20431 Hamburg (DE)**

(56) Entgegenhaltungen:
JP-A- 2002 243 416    US-A1- 2009 225 313
US-A1- 2010 280 779    US-A1- 2012 307 258
US-A1- 2014 332 687    US-B1- 7 933 027

**Beschreibung**

Die Erfindung betrifft eine Vorrichtung und ein Verfahren zur Messung der Wanddicke eines im Querschnitt im Wesentlichen kreisförmigen Rohrs. Zur Messung der Wanddicke von strangförmigen Gütern, beispielsweise elektrischen Kabeln, Schläuchen oder Rohren, sind Ultraschallmessvorrichtungen bekannt. Nachteilig bei Ultraschallmessvorrichtungen ist das Erfordernis einer Berührung des zu vermessenden Strangs mit einem Kontaktmedium. Die Dichte, die Temperatur und die Qualität des Mediums, in der Regel Wasser, haben einen starken Einfluss auf das Messergebnis. Darüber hinaus sind Messergebnisse solcher Ultraschallmessvorrichtungen abhängig von der Temperatur des Strangs, insbesondere der zu messenden Wanddicke. Weiterhin geben bekannte Ultraschallmessgeräte keine Auskunft über den Durchmesser oder die Unrundheit eines Strangs. Geschäumte oder teilweise geschäumte Produkte haben eine zu hohe Absorption für Ultraschallwellen und können daher ebenfalls mit Ultraschallmessgeräten nicht gemessen werden.

Es sind auch sogenannte Terahertz-Messgeräte bekannt, bei denen ein Sender Terahertzstrahlung in einem Frequenzbereich von etwa 0,05 bis 3 Terahertz aussendet, diese Strahlung an einem zu vermessenden Produkt reflektiert wird und die reflektierte Strahlung von einem geeigneten Empfänger empfangen wird. Mit den bekannten Terahertz-Messgeräten werden allerdings lediglich Abstände oder Wanddicken von ebenen Produkten gemessen, zum Beispiel von Platten. Dazu wird die Terahertzstrahlung auf die Oberfläche der zu messenden Platte fokussiert. Eine Reflektionsmessung zur Bestimmung des Abstandes oder der Wanddicke ist dann vergleichsweise einfach. Sollen mit solchen Messgeräten allerdings Durchmesser oder Wanddicken von zylindrischen Strangprodukten, also beispielsweise Kabeln, Rohren oder Schläuchen gemessen werden, wäre eine Nachführung des Sensors zur optimalen Fokussierung auf die Oberfläche des zu messenden Strangs erforderlich. Besonders gilt dies bei veränderlichen Durchmessern des zu vermessenden Strangs. Hiermit ist ein erheblicher messtechnischer Aufwand verbunden. Nachteilig ist weiterhin, dass für jeden Krümmungsradius eines zu vermessenden Strangs die Algorithmen zur Auswertung der Messsignale neu angepasst werden müssen. Hiermit ist ein erheblicher auswertungstechnischer Aufwand verbunden. Insbesondere bei (teil-)transparenten Strängen besteht darüber hinaus das Problem der Auswertung mehrfach reflektierter Strahlungsanteile. US 7 933 027 B1, US 2010/280779 A1, US 2009/225313 A1, JP 2002 243416 A, US 2014/332687 A1 und US 2012/307258 A1 offenbaren Terahertz -Messgeräte.

Ausgehend von dem erläuterten Stand der Technik liegt der Erfindung die Aufgabe zugrunde, eine Vorrichtung und ein Verfahren der eingangs genannten Art bereitzustellen, mit denen in messtechnisch und auswertungstechnisch einfacher Weise zuverlässig und mit möglichst geringen Einflüssen äußerer Parameter, wie der Temperatur, die Wanddicke eines im Querschnitt im Wesentlichen kreisförmigen Rohrs gemessen werden kann.

Die Erfindung löst die Aufgabe durch die Gegenstände der unabhängigen Ansprüche 1 und 11. Vorteilhafte Ausgestaltungen finden sich in den abhängigen Ansprüchen, der Beschreibung und den Figuren. Der Schutzbereich der Erfindung wird durch die Ansprüche definiert.

Der erfindungsgemäß vermessene Strang ist im Wesentlichen kreiszylindrisch und wird mit Führungsmitteln durch die Vorrichtung geführt. Eine Relativbewegung zwischen dem Strang und dem Sender und Empfänger der Vorrichtung erfolgt in Axialrichtung des Strangs. Der Strang wird durch die Führungsmittel bzw. einen geeigneten Antrieb der Führungsmittel in Richtung seiner Längsachse durch die Vorrichtung bzw. die Sender und Empfänger hindurchgeführt bzw. bewegt. Die Führungsmittel sind Teil der erfindungsgemäßen Vorrichtung.

Der Sender und Empfänger bzw. die Strahlungsoptik sind insbesondere so ausgerichtet, dass die optische Achse von Sender und Empfänger bzw. Strahlungsoptik im Wesentlichen senkrecht zur Längsachse des Strangs liegt. Die von dem Sender ausgesandte Terahertzstrahlung wird dann also durch die Strahlungsoptik im Wesentlichen senkrecht auf den Strang geleitet. Der Strang kann aus mehreren Wandabschnitten aufgebaut sein. Diese Wandabschnitte können jeweils im Wesentlichen kreiszylindrisch bzw. hohlkreiszylindrisch ausgebildet sein. Einzelne oder alle Wandabschnitte können (teil-)durchlässig für die Terahertzstrahlung sein.

Der mindestens eine Sender sendet Terahertzstrahlung aus, die entsprechend von dem mindestens einen Empfänger empfangen wird. Ein möglicher Frequenzbereich für die von dem mindestens einen Sender ausgesandte Terahertzstrahlung beträgt 0,05 bis 3 Terahertz. Sender und Empfänger sind mit einer Auswerteeinrichtung verbunden, insbesondere über geeignete Leitungen. Die Auswerteeinrichtung kann den mindestens einen Sender und/oder den mindestens einen Empfänger auch ansteuern. Insbesondere kann die Auswerteeinrichtung den mindestens einen Sender zum Aussenden von Terahertzstrahlung ansteuern. Damit kennt die Auswerteeinrichtung den Startzeitpunkt für eine etwaige Laufzeitmessung. Anhand des Zeitpunkts, zu dem der Empfänger ein reflektiertes Signal empfängt und dies an die Auswerteeinrichtung übermittelt, kann die Laufzeit der an dem zu vermessenden Strang und/oder dem Reflektor reflektierten Terahertzstrahlung durch die Auswerteeinrichtung bestimmt werden.

Gegenüberliegend zu zumindest einem Sender in Strahlungsrichtung der von dem Sender ausgesandten Terahertzstrahlung hinter dem Strang ist ein Reflektor für die Terahertzstrahlung angeordnet ist. Der Reflektor kann ein zylindrisch gewölbter Reflektor sein, dessen Längsachse in Richtung der Längsachse eines durch die Vorrichtung geführten Strangs verläuft. Der Krümmungsmittelpunkt des Reflektors fällt dann insbesondere mit dem Krümmungsmittelpunkt des zu vermessenden Strangs zusammen. Die Brennlinie des hohlzylindrischen Reflektors fällt dann also mit der Längsachse des Strangs zusammen und kann mit der Brennlinie der Terahertzstrahlung zusammen fallen. Ein Reflektor verstärkt das Messsignal, weil auch die durch den Reflektor zurück zu dem Empfänger geleiteten Signale zur Auswertung kommen können. Außerdem erlaubt der Reflektor eine noch bessere Diskriminierung der unterschiedlichen von dem oder den Empfängern empfangenen Messsignale, besonders bei Mehrfachreflektionen. So gestattet ein Reflektor die getrennte Auswertung der Sender/Empfänger zugewandten bzw. abgewandten Vorder- und Rückseite eines Stranges und kann somit Störungen durch Mehrfachreflektionen vermeiden. Insbesondere gestattet ein Reflektor eine Messung durch Reflektionen der Terahertzstrahlung an Grenzflächen des Strangs sowohl auf dem Hinweg der Strahlung von dem Sender zu dem Reflektor als auch auf dem Rückweg der Strahlung von dem Reflektor zu dem Empfänger. So können beispielsweise Laufzeiten verglichen werden von Signalen, die einerseits von dem Sender/Empfänger direkt zum Reflektor und zurück zum Sender/Empfänger gelangen und die andererseits von dem Sender/Empfänger direkt zum Reflektor gelangen, dann von dem Reflektor kommend an der rückwärtigen Strangwand bzw. den innen und außen liegenden Grenzflächen der rückwärtigen Strangwand reflektiert werden, zurück zum Reflektor gelangen und von diesem erneut reflektiert zurück zum Sender/Empfänger gelangen. Aus diesem Laufzeitunterschied kann auf den Abstand der rückwärtigen Strangwand zum in seiner Position bekannten Reflektor bzw. die Wanddicke der dem Reflektor zugewandten rückwärtigen Strangwand bzw. auf den Durchmesser des Stranges geschlossen werden. Die Auswerteeinrichtung der erfindungsgemäßen Vorrichtung kann entsprechend hierzu ausgebildet sein. Der Reflektor simuliert dann einen weiteren Sender. Mit Hilfe des Reflektors kann die dem Reflektor zugewandte Seite eines Stranges also auch dann verlässlich gemessen werden, wenn das ursprüngliche Empfangssignal von der rückwärtigen Strangwand durch Mehrfachreflektionen zwischen Sender/Empfänger und den Sender/Empfänger zugewandten Grenzflächen eines Strangs gestört ist.

Das Messergebnis störende Mehrfachreflektionen treten beispielsweise dann auf, wenn der Abstand von Sender/Empfänger zur zugewandten Oberfläche des Strangs gleich dem Durchmesser des Stranges ist. Ist $s_1$ der Abstand von Sender/Empfänger zu der zugewandten Oberfläche des Strangs und d der Durchmesser des Strangs, so gilt dann

$$4s_1 = 2(s_1 + d)$$

Es treffen also Strahlenechos von der dem Sender/Empfänger abgewandten Rückwand des Stranges zeitgleich mit doppelt zwischen dem Sender/Empfänger und der Sender/Empfänger zugewandten Oberfläche des Stranges reflektierten Strahlen am Empfänger ein. Dies führt zu einer Störung des Messergebnisses. Störungen durch Mehrfachreflektionen zwischen dem Reflektor und der ihm zugewandten Oberfläche des Stranges treten für von dem Reflektor kommende Signale bei einem Strangdurchmesse d ≠ 0 dagegen nicht auf. Gleiches gilt für von dem Reflektor kommende Signale hinsichtlich etwaiger Störungen durch Mehrfachreflektionen innerhalb des Stranges. Für den Fall, dass d = $s_1$ ist, kann die Lage bzw. die Dicke der dem Reflektor zugewandten rückwärtigen Strangwand dann also in der oben erläuterten Weise gemessen werden, indem der Reflektor in der erläuterten Weise als Simulation eines weiteren Senders genutzt wird.

Auch besteht die Möglichkeit durch eine (geringe) Veränderung des Werts $s_1$ den Einfluss von Mehrfachreflektionen auf andere Durchmesserwerte d zu verschieben, und dadurch in einen Durchmesserbereich, der für den jeweiligen Anwendungsfall nicht relevant ist.

Darüber hinaus schirmt der Reflektor die Strahlung der Hochfrequenz verlässlich ab und verhindert, dass Hochfrequenzstrahlung nach außen in die Umgebung der Messvorrichtung gelangt. Auch kann mit Hilfe des Reflektors die Laufzeit der Terahertz-Strahlung in der Vorrichtung ohne durch die Vorrichtung geführten Strang gemessen werden. Diese Laufzeit kann verglichen werden mit der Laufzeit der Terahertz-Strahlung in der Vorrichtung bei durch die Vorrichtung geführtem Strang. Wie weiter unten noch näher erläutert werden wird, kann auf diese Weise die Durchmesser- und Wanddickenbestimmung unabhängig von den Eigenschaften des Strangmaterials und damit ohne Kenntnis der genauen Eigenschaften des Strangmaterials erfolgen. Auch können auf diese Weise der Brechungsindex und die Absorption des Strangmaterials bestimmt werden.

Soweit der zu vermessende Strang bzw. seine Schichten eine (Teil-)Durchlässigkeit für die Terahertzstrahlung aufweisen, wie dies beispielsweise bei Plastikrohren oder Plastikschläuchen der Fall ist, kann erfindungsgemäß auch die dem Sensor abgewandte rückwärtige Außenseite des Strangs gemessen werden, da es auch an dieser rückwärtigen Außenseite zu einer Reflektion der Terahertzstrahlung kommt. Auf diese Weise ist also eine Wanddickenmessung oder eine Durchmessermessung des Strangs möglich. Insbesondere kann es an der dem Sender und Empfänger zugewandten Außenseite des Strangs, an der dem Sender und Empfänger abgewandten rückwärtigen Außenseite des Strangs und an einigen oder sämtlichen Grenzflächen zwischen unterschiedlichen Schichten des Strangs zu (Teil-)Reflektionen der Terahertzstrahlung kommen. Beispielsweise durch Auswertung der Laufzeitdifferenz zwischen an der dem Sender/Empfänger zugewandten vorderen Außenseite des Strangs reflektierter Strahlung und an der dem Sender/Empfänger abgewandten rückwärtigen Außenseite des Strangs reflektierter Strahlung kann der Durchmesser des Strangs ermittelt werden. Die Wanddicke einer bestimmten Schicht des Strangs kann entsprechend durch Auswertung der Laufzeitdifferenz zwischen an der dem Sender/Empfänger zugewandten äußeren Grenzfläche der interessierenden Schicht des Strangs reflektierter Strahlung und an der dem Sender/Empfänger abgewandten inneren Grenzfläche der interessierenden Schicht des Strangs reflektierter Strahlung ermittelt werden.

Insgesamt ergibt sich mit der erfindungsgemäßen Vorrichtung bzw. dem erfindungsgemäßen Verfahren ein verringerter Aufwand sowohl in messtechnischer als auch in auswertungstechnischer Hinsicht bei gleichzeitig zuverlässiger Messung des Durchmessers und/oder der Wanddicke eines im Querschnitt im Wesentlichen kreisförmigen Strangs bei minimierten Einflüssen äußerer Parameter, wie Temperatur etc.

Nach einem Ausführungsbeispiel kann durch eine geeignete Strahlungsoptik, umfassend beispielsweise eine oder mehrere geeignete Linsen, die von dem mindestens einen Sender ausgesandte Terahertzstrahlung als Fokus- bzw. Brennlinie auf die (zentrale) Längsachse bzw. Zylinderachse des zu vermessenden Strangs fokussiert werden. In einer Ebene senkrecht zur Längsrichtung des Strangs gesehen liegt der Fokus der von dem mindestens einen Sender ausgesandten Terahertzstrahlung dann also im Kreismittelpunkt des Strangs und nicht, wie im Stand der Technik, auf der Oberfläche. Es versteht sich, dass die an Flächen des Strangs reflektierte Terahertzstrahlung wieder durch die mindestens eine Strahlungsoptik zu dem mindestens einen Empfänger geleitet werden kann. Der Strahlengang der von dem Strang reflektierten Terahertzstrahlung zu dem mindestens einen Empfänger kann bis auf die Richtungsumkehr identisch zu dem Strahlengang von dem mindestens einen Sender zu dem Strang sein. Indem erfindungsgemäß die Terahertzstrahlung auf eine auf der (zentralen) Längsachse des Strangs liegende Brennlinie fokussiert wird, ist die Richtung sämtlicher von dem mindestens einen Sender ausgehender Strahlen jederzeit und auch bei verändertem Strangdurchmesser jeweils senkrecht auf der im Querschnitt im Wesentlichen kreisförmigen Oberfläche bzw. auf den im Querschnitt ebenfalls im Wesentlichen kreisförmigen Grenzflächen zwischen unterschiedlichen zylindrischen bzw. hohlzylindrischen Schichten des Strangs. Auf diese Weise können zur Auswertung an sich bekannte Algorithmen zur Abstands- oder Wanddickenmessung, wie sie beispielsweise bei ebenen Produkten wie Platten zum Einsatz kommen, auch bei einem zylindrischen Strang verwendet werden. Darüber hinaus können auch bei unterschiedlichen bzw. sich ändernden Strangdurchmessern immer dieselben Auswertealgorithmen verwendet werden. Solange die Terahertzstrahlung auf die Längsachse des Strangs fokussiert bleibt, ist bei einer Durchmesseränderung des Strangs kein Nachführen der erfindungsgemäßen Messvorrichtung erforderlich.

Wie bereits erläutert, kann die optische Achse des mindestens einen Senders und des mindestens einen Empfängers im Wesentlichen senkrecht zur Längsachse des Strangs liegen. Weiterhin können die Randstrahlen der durch die mindestens eine Strahlungsoptik fokussierten Terahertzstrahlung eine Keilform bilden, wobei die den spitzen Winkel der Keilform begrenzenden Seitenflächen der Keilform spiegelsymmetrisch zu einer durch die Längsachse des durch die Vorrichtung geführten Strangs verlaufenden Mittelebene (Äquatorialebene) liegen. Besonders einfach lässt sich der linienförmige Fokus der Terahertzstrahlung auf den Strang erreichen, wenn die mindestens eine Strahlungsoptik mindestens eine Zylinderlinse umfasst. Natürlich sind als Strahlungsoptik auch andere Antennenausgestaltungen denkbar als die vorstehend beschriebenen Linsen. Beispielsweise kann eine kombinierte Bikonvex-/Zylinderlinse zum Einsatz kommen.

Alternativ zu einem Linienfokus kann die Strahlungsoptik die Terahertzstrahlung aber auch beispielsweise (möglichst eng gebündelt) fächerförmig auf den Strang fokussieren. Dies bietet eine besonders einfache und preiswerte Ausführung. Nach einer weiteren Alternative kann die Strahlungsoptik die Terahertzstrahlung parallel auf den Strang leiten. Dies hat den Vorteil, dass geringe Positionsveränderungen des zu prüfenden Stranges senkrecht zur Abstrahlrichtung wenig Einfluss auf das Messergebnis haben.

Nach einer weiteren bevorzugten Ausgestaltung kann der mindestens eine Sender modulierte Dauerstrich-Terahertzstrahlung aussenden, insbesondere frequenzmodulierte Dauerstrich-Terahertzstrahlung. Die Frequenzmodulation kann einen Frequenz-Burst oder mehrere Frequenz-Bursts umfassen. Insbesondere kann ein sogenannter Frequenzsweep erfolgen, bei dem ein vorgegebener Frequenzbereich ein- oder mehrmals durchgefahren wird.

Es ist aber beispielsweise auch möglich, dass der mindestens eine Sender impulsmodulierte Terahertzstrahlung oder phasenmodulierte Terahertzstrahlung aussendet. Beispielsweise kann ein sogenanntes Time Domain Reflectometry Verfahren oder Frequency Domain Reflectometry Verfahren zum Einsatz kommen. Auch das Versenden mehrerer diskreter Frequenzen anstelle eines Frequenzspektrums ist denkbar. Solche Verfahren sind an sich bekannt.

Bei dem Strang kann es sich beispielsweise um ein (kreis-)zylinderförmiges elektrisches Kabel mit einem (kreis-)zylindrischen elektrischen Leiter aus Metall, gegebenenfalls einem im Wesentlichen hohl(kreis-)zylindrischen Abschirmgeflecht und einer hohl(kreis-)zylindrischen Kunststoffummantelung als Isolierung handeln. Ebenso kann es sich um ein Rohr, beispielsweise aus einem Kunststoff, handeln. Durch eine Modulation des von dem mindestens einen Sender ausgesandten Dauerstrich-Strahlungssignals (beispielsweise FMCW) ist es besonders einfach möglich, an unterschiedlichen Grenzflächen eines aus mehreren Schichten aufgebauten zylindrischen Strangs reflektierte Strahlung im Empfänger bzw. in der Auswerteeinrichtung anhand der jeweiligen Frequenz der empfangenen Strahlung zu unterscheiden. Damit können zuverlässig die Abstände des Senders bzw. Empfängers zu unterschiedlichen Grenzschichten des Strangs und damit die Wanddicke beispielsweise einer Kunststoffummantelung eines elektrischen Kabels oder der Durchmesser eines Strangs bestimmt werden.

Es kann weiter vorgesehen sein, dass die Auswerteeinrichtung den Durchmesser und/oder die Wanddicke des Strangs anhand einer Laufzeitmessung der von dem mindestens einen Sender ausgesandten Terahertzstrahlung bestimmt.

Ein besonders einfacher Aufbau ergibt sich, wenn der mindestens eine Sender und der mindestens eine Empfänger durch mindestens einen Terahertz-Transceiver gebildet sind. Ein Transceiver ist ein kombinierter Sender (Transmitter) und Empfänger (Receiver). Sender und Empfänger sind dann praktisch ortsgleich angeordnet und haben jederzeit den gleichen Abstand zum Strang bzw. zu den die Terahertzstrahlung reflektierenden Flächen des Strangs, so dass sich die Auswertung beispielsweise bei einer Laufzeitmessung weiter vereinfacht. Natürlich ist es aber auch denkbar, Sender und Empfänger nicht praktisch ortsgleich anzuordnen, sondern beispielsweise einander gegenüberliegend.

Nach einer weiteren Ausgestaltung kann vorgesehen sein, dass mehrere Paare von Sendern und Empfängern zum Aussenden bzw. Empfangen von Terahertzstrahlung vorgesehen sind, vorzugsweise mindestens zwei, weiter vorzugsweise mindestens vier oder mehr als vier, beispielsweise acht Paare von Sendern und Empfängern, wobei für jeden Sender/Empfänger eine Strahlungsoptik vorgesehen ist, wobei die Sender und Empfänger paarweise über den Umfang des durch die Vorrichtung geführten Strangs verteilt angeordnet sind, vorzugsweise entlang einer Kreisbahn. Dabei ist jeweils ein Empfänger jeweils einem Sender zugeordnet und empfängt die Strahlung dieses Senders. Jedes Paar aus Sender und Empfänger kann wiederum durch jeweils einen Transceiver gebildet sein. Dann sind die Transceiver entsprechend über den Umfang des zu vermessenden Strangs verteilt angeordnet.

Es kann dann weiter vorgesehen sein, dass die Auswerteeinrichtung dazu ausgebildet ist, anhand der von den Empfängern jeweils empfangenen Messsignale eine Unrundheit des Strangs zu ermitteln und/oder einzelne oder mehrere Sender und Empfänger oder Strahlungsoptiken so nachzuführen, dass die von den Sendern ausgesandte Terahertzstrahlung jeweils auf die Längsachse eines durch die Vorrichtung geführten Strangs linienförmig fokussiert bleibt. Die Auswerteeinrichtung kann dazu geeignete Antriebe zum Nachführen von Sender und Empfänger oder Strahlungsoptik auf Grundlage der Messergebnisse der einzelnen Empfänger ansteuern. Die Auswerteeinrichtung kann insbesondere eine kombinierte Auswerte- und Steuereinrichtung sein. Es kann ein entsprechender Regelkreis in der Steuereinrichtung aufgebaut werden. Eine etwaige Unrundheit des zu vermessenden Strangs kann aus einem Vergleich der Messergebnisse einzelner Empfänger ebenfalls durch die Auswerteeinrichtung ermittelt werden.

Bei den vorgenannten Ausgestaltungen wird somit der Abstand zwischen Sender/Empfänger und Strang aus unterschiedlichen Richtungen und damit die Wanddicke, der Durchmesser und/oder die Unrundheit des Strangs gemessen, ohne dass ein Nachstellen der Positionen der Sender/Empfänger erforderlich ist. Dies gilt insbesondere bei der Verwendung von mindestens zwei Paaren von Sender/Empfänger. So können pro Sender/Empfänger Paar zwei Messorte vorliegen, an denen eine Reflektionsmessung der Terahertzstrahlung erfolgt, beispielsweise an der Vorder- und Rückseite einer reflektierenden Fläche oder Schicht des Strangs. In diesem Fall ist durch die an drei Messorten ermittelten Abstände ein Kreis definiert. Unter Nutzung eines vierten Messortes kann dann eine Unrundheit erkannt werden. Eine Fokussierung auf die Oberfläche des Stranges, wie im Stand der Technik vorgesehen, würde dagegen einen Abstandsabgleich erfordern, falls sich der Durchmesser des Strangs ändert. Natürlich müsste dann auch die Position der einzelnen Sender/Empfänger bezüglich Ihres Abstandes zur Oberfläche des Strangs gemessen und gegebenenfalls einer Auswerteeinrichtung mitgeteilt werden, wenn auch der Durchmesser und die Unrundheit des Stranges gemessen werden soll.

Insbesondere anstelle der vorgenannten Ausgestaltung mit mehreren Paaren von Sendern und Empfängern ist es auch möglich, dass mindestens ein Paar aus einem Sender zum Aussenden von Terahertzstrahlung und einem Empfänger zum Empfangen der von dem Sender ausgesandten Terahertzstrahlung, beispielsweise zwei Paare aus Sender und Empfänger, während eines Messvorgangs um die Längsachse des Strangs gedreht wird, vorzugsweise entlang einer Kreisbahn. Bei dem Paar bzw. den Paaren von Sender und Empfänger kann es sich wiederum um einen Transceiver handeln. Durch das Rotieren des Sender/Empfänger Paars um den Strang kann das Vorhandensein mehrerer Paare von Sendern und Empfängern simuliert werden. Auf diese Weise können in einfacher und zuverlässiger Weise Unstetigkeiten der Form des Stranges festgestellt werden, beispielsweise ein sogenanntes Sagging, wie es beispielsweise im Zuge der Extrusion des Strangmaterials entstehen kann.

Damit kann eine Auswertung erfolgen wie sie grundsätzlich oben zu mehreren Paaren von Sendern und Empfängern beschrieben ist. Insbesondere kann die Auswerteeinrichtung dazu ausgebildet sein, anhand der von dem rotierenden Empfänger im Zuge seiner Rotation empfangenen Messsignale eine Unrundheit des Strangs zu ermitteln und/oder den rotierenden Sender bzw. Empfänger oder die Strahlungsoptik so nachzuführen, dass die von dem rotierenden Sender ausgesandte Terahertzstrahlung jeweils auf die Längsachse eines durch die Vorrichtung geführten Strangs linienförmig fokussiert bleibt. Die Auswerteeinrichtung kann dazu wiederum geeignete Antriebe zum Nachführen von Sender bzw. Empfänger oder Strahlungsoptik auf Grundlage der Messergebnisse ansteuern. Die Auswerteeinrichtung kann wiederum eine kombinierte Auswerte- und Steuereinrichtung sein. Es kann wiederum ein entsprechender Regelkreis in der Steuereinrichtung aufgebaut werden. Eine etwaige Unrundheit des zu vermessenden Strangs kann aus einem Vergleich der Messergebnisse des rotierenden Empfängers ebenfalls durch die Auswerteeinrichtung ermittelt werden.

Wie bereits erwähnt, kann der erfindungsgemäß vermessene zylindrische Strang ein elektrisches Kabel, ein Rohr, vorzugsweise ein Kunststoffrohr, oder ein Schlauch, vorzugsweise ein Kunststoffschlauch, sein. Denkbar ist beispielsweise ein kunststoffummanteltes Metallrohr oder auch ein Kunststoffrohr mit einer Metallschicht, zum Beispiel als Dampfsperre. Das Rohr oder der Schlauch können hohlkreiszylindrisch sein. Ein elektrisches Kabel kann insbesondere einen oder mehrere vorzugsweise kreiszylindrische metallische Leiter, gegebenenfalls eine hohlkreiszylindrische metallische Abschirmung und eine oder mehrere hohlkreiszylindrische Mantelschichten (Isolierschichten), vorzugsweise aus Kunststoff, besitzen, die den bzw. die metallischen Leiter umgeben.

In weiter vorteilhafter Weise kann eine durch das Material des durch die Vorrichtung geführten Strangs verursachte Laufzeitänderung der von dem mindestens einen Sender ausgesandten und nach Durchstrahlen des Strangs von dem mindestens einen Empfänger empfangenen Terahertzstrahlung bei der Bestimmung des Durchmessers und/oder der Wanddicke(n) des Strangs berücksichtigt werden.

Wie erwähnt, kann es sich bei dem durch die Vorrichtung geführten Strang um einen hohlzylindrischen Strang aus einem Kunststoff, beispielsweise ein Kunststoffrohr, handeln. Trotz bestimmter Vorgaben an die Hersteller variieren insbesondere die Kunststoffmischungen in der Praxis erheblich. Dadurch ist die genaue Materialzusammensetzung des Strangs oftmals nicht bekannt. Damit sind auch einige für das erfindungsgemäße Messverfahren relevante Materialkonstanten zunächst nicht bekannt und müssten entweder in aufwendiger Weise separat ermittelt werden oder es müssen in dieser Hinsicht nicht notwendigerweise korrekte Annahmen getroffen werden. Relevant sind insbesondere Materialkonstanten, wie der Brechungsindex bzw. die Dielektrizitätszahl bzw. der Absorptionskoeffizient. Diese Materialkonstanten haben unmittelbaren Einfluss auf die erfindungsgemäße Wanddickenbestimmung, da die Terahertzstrahlung abhängig von den genannten Materialkonstanten unterschiedliche Ausbreitungsgeschwindigkeiten in dem Material besitzt. So wird die Ausbreitungsgeschwindigkeit der Grundwellen der Terahertzstrahlung abhängig von diesen Materialkonstanten unterschiedlich verzögert. Wird beispielsweise bei einer Laufzeitmessung der Terahertzstrahlung für die Durchmesser- oder Wanddickenbestimmung die Ausbreitungsgeschwindigkeit der Terahertzstrahlung in Luft zugrunde gelegt, kommt es zu einem fehlerhaften Ergebnis, insbesondere fehlerhaft um die durch das Strangmaterial verursachte Verzögerung der Terahertzstrahlung.

Die vorgenannte erfindungsgemäße Ausgestaltung ermöglicht in einfacher und sicherer Weise, solche Fehler auch bei unbekannter Materialzusammensetzung des untersuchten Strangs zu eliminieren. Bevorzugt wird dabei die von dem Sender, bevorzugt einem Transceiver, ausgesandte Terahertzstrahlung nach Durchstrahlen des Strangs von einem Reflektor reflektiert und nach erneutem Durchstrahlen des Strangs von dem Empfänger, bevorzugt wieder von dem Transceiver, empfangen. Die dabei durchgeführte Laufzeitmessung bei durch die Vorrichtung geführtem Strang kann in einfacher Weise mit der entsprechenden Laufzeitmessung bei nicht durch die Vorrichtung geführtem Strang verglichen werden. Aus dem Unterschied dieser beiden Laufzeitmessungen kann auf die durch das Material des Strangs verursachte Änderung der Ausbreitungsgeschwindigkeit der Terahertzstrahlung geschlossen werden. Auch können der Abstand zwischen Sender und Empfänger bzw. zu dem Reflektor und damit der von der Terahertzstrahlung im Zuge der Laufzeitmessung zurückgelegte Weg bekannt sein. Anhand der bekannten Ausbreitungsgeschwindigkeit der Terahertzstrahlung in Luft kann dann auch auf dieser Grundlage die durch das Material des Strangs verursachte Veränderung der Ausbreitungsgeschwindigkeit in einfacher Weise ermittelt werden.

Die so ermittelte, durch das Material des Strangs verursachte Laufzeitänderung kann bei der Bestimmung des Durchmessers und/oder der Wanddicke rechnerisch berücksichtigt werden, um so auch ohne Kenntnis der genauen Materialzusammensetzung präzise den Durchmesser und/oder die Wanddicken des Strangs zu ermitteln. Beispielsweise bei der Durchmesserbestimmung ist es lediglich erforderlich, von dem gemessenen Laufzeitunterschied zwischen an der Vorderseite und an der Rückseite des Strangs reflektierter Terahertzstrahlung die wie oben erläutert ermittelte und durch das Material des Strangs verursachte Laufzeitänderung abzuziehen. In entsprechender Weise ist dies bei der Wanddickenbestimmung eines rohrförmigen Strangs möglich, indem die von den beiden von der Terahertzstrahlung durchstrahlten Wänden verursachte Laufzeitänderung rechnerisch anteilig berücksichtigt wird. Es wird bei dieser Ausgestaltung also messtechnisch und rechnerisch der Einfluss des Strangmaterials auf die Ausbreitungsgeschwindigkeit der Terahertzstrahlung eliminiert.

Es ist beispielsweise möglich, dass der Durchmesser D des Strangs nach der folgenden Formel bestimmt wird:

$$D = \frac{1}{2}\left(\Delta T_D - \Delta T_R\right)c$$

mit:

$\Delta T_D$  Laufzeitunterschied zwischen an der dem mindestens einen Empfänger zugewandten äußeren Grenzfläche des Strangs und an der dem mindestens einen Empfänger abgewandten äußeren Grenzfläche des Strangs reflek-

tierter Terahertzstrahlung,

$\Delta T_R$   Durch das Material des durch die Vorrichtung geführten Strangs verursachte Laufzeitänderung der von dem mindestens einen Sender ausgesandten und nach Durchstrahlen des Strangs von dem mindestens einen Empfänger empfangenen Terahertzstrahlung,

$c$   Ausbreitungsgeschwindigkeit der Terahertzstrahlung in Luft.

Weiterhin ist es möglich, dass die Wanddicke $W_{d1}$ der dem mindestens einen Empfänger zugewandten Wand bzw. des Wandabschnitts des Strangs und/oder die Wanddicke $W_{d2}$ der dem mindestens einen Empfänger abgewandten Wand bzw. des Wandabschnitts des Strangs nach folgenden Formeln bestimmt wird:

$$W_{d1} = \frac{1}{2}\left(\Delta T_{wd1} - \frac{\Delta T_R \; x \; \Delta T_{wd1}}{\Delta T_{wd1} + \Delta T_{wd2}}\right) c$$

$$W_{d2} = \frac{1}{2}\left(\Delta T_{wd2} - \frac{\Delta T_R \; x \; \Delta T_{wd2}}{\Delta T_{wd2} + \Delta T_{wd1}}\right) c$$

mit:

$\Delta T_{wd1}$   Laufzeitunterschied zwischen an der dem mindestens einen Empfänger zugewandten äußeren Grenzfläche und an der dem mindestens einen Empfänger abgewandten inneren Grenzfläche der dem mindestens einen Empfänger zugewandten Wand des Strangs reflektierter Terahertzstrahlung,

$\Delta T_{wd2}$   Laufzeitunterschied zwischen an der dem mindestens einen Empfänger zugewandten inneren Grenzfläche und an der dem mindestens einen Empfänger abgewandten äußeren Grenzfläche der dem mindestens einen Empfänger abgewandten Wand des Strangs reflektierter Terahertzstrahlung,

$\Delta T_R$   Durch das Material des durch die Vorrichtung geführten Strangs verursachte Laufzeitänderung der von dem mindestens einen Sender ausgesandten und nach Durchstrahlen des Strangs von dem mindestens einen Empfänger empfangenen Terahertzstrahlung,

$c$   Ausbreitungsgeschwindigkeit der Terahertzstrahlung in Luft

Aus der ermittelten Änderung der Ausbreitungsgeschwindigkeit kann auf die diese Änderung verursachenden Materialkonstanten des Strangs geschlossen werden, wie Brechungsindex und/oder Dielektrizitätszahl. Auch kann auf diese Weise auf den Absorptionskoeffizienten und damit die Dämpfung des Strangs geschlossen werden. Dies wiederum kann die Auswertegenauigkeit bei mehrfach an optischen Grenzflächen des Strangs reflektierten Strahlen erhöhen.

Die erfindungsgemäße Vorrichtung ist insbesondere ausgebildet zur Durchführung des erfindungsgemäßen Verfahrens. Das erfindungsgemäße Verfahren kann insbesondere unter Verwendung einer erfindungsgemäßen Vorrichtung durchgeführt werden.

Ausführungsbeispiele der Erfindung werden nachfolgend anhand von Figuren näher erläutert. Es zeigen schematisch:

Fig. 1     eine erfindungsgemäße Vorrichtung zur Messung eines ersten Strangs in einer ersten Ansicht,

Fig. 2     die erfindungsgemäße Vorrichtung aus Fig. 1 in einer zweiten Ansicht, und

Fig. 3     ein weiteres Ausführungsbeispiel einer erfindungsgemäßen Vorrichtung zur Messung eines Strangs.

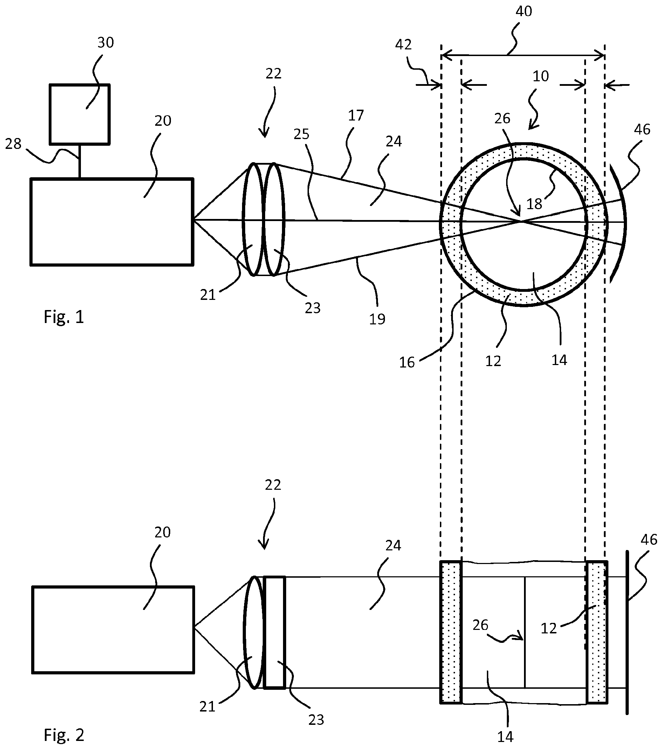

Soweit nichts anderes angegeben ist, bezeichnen in den Figuren gleiche Bezugszeichen gleiche Gegenstände. In Fig. 1 ist eine erfindungsgemäße Vorrichtung und Messanordnung in einer vertikalen Schnittansicht gezeigt. In Fig. 2 ist die Vorrichtung und Messanordnung aus Fig. 1 in einer horizontalen Schnittansicht gezeigt. Bei dem in den Fign. 1 und 2 gezeigten Ausführungsbeispiel wird ein kreiszylindrischer Strang 10 durch geeignete, nicht näher dargestellte Führungsmittel entlang seiner in Fig. 1 senkrecht in die Zeichenebene hineinzeigenden und in Fig. 2 von unten nach oben zeigenden zentralen Längsachse (Zylinderachse) durch die Vorrichtung gefördert. Bei dem in den Fign. 1 und 2 gezeigten Strang 10 handelt es sich beispielsweise um ein Kunststoffrohr mit einer hohlkreiszylindrischen Wand 12 aus Kunststoff, die einen kreiszylindrischen Hohlraum 14 begrenzt. In der in Fig. 1 gezeigten Querschnittsdarstellung ist gut erkennbar, dass der Strang 10 einen kreisförmigen Querschnitt besitzt. Insbesondere besitzt die Wand 12 des Strangs 10 eine im Querschnitt kreisförmige Außenseite 16 und eine im Querschnitt ebenfalls kreisförmige Innenseite 18, die den Hohlraum 14 begrenzt.

Die in den Fign. 1 und 2 gezeigte erfindungsgemäße Vorrichtung umfasst einen Sender zum Aussenden von Terahertzstrahlung und einen Empfänger zum Empfangen der von dem Sender ausgesandten Terahertzstrahlung, wobei der Sender und Empfänger in dem dargestellten Beispiel durch einen Terahertz-Transceiver 20 gebildet sind. Natürlich könnten auch räumlich getrennte Sender und Empfänger vorgesehen sein, beispielsweise einander gegenüberliegend. Bei dem Bezugszeichen 22 ist schematisch eine Strahlungsoptik, vorliegend umfassend eine Bikonvexlinse 21 und eine Zylinderlinse 23 für die Terahertzstrahlung dargestellt. Natürlich sind auch andere Strahlungsoptiken denkbar. Beispielsweise könnte eine kombinierte Bikonvex-/Zylinderlinse zum Einsatz kommen. Die Strahlungsoptik 22 fokussiert die von dem Sender ausgesandte Terahertzstrahlung 24 linienförmig derart, dass der linienförmige Fokus 26 der Terahertzstrahlung mit der zentralen Längsachse des Strangs 10 zusammenfällt, in der Querschnittsdarstellung in Fig. 1 also im Mittelpunkt des im Querschnitt kreisförmigen Strangs 10 liegt. Die Randstrahlen der durch die Strahlungsoptik 22 fokussierten Terahertzstrahlung bilden eine Keilform, wie aus einem Vergleich der Figuren 1 und 2 ersichtlich. Die in Fig. 1 bei den Bezugszeichen 17 und 19 gezeigten Seitenflächen der Keilform sind spiegelsymmetrisch zu einer durch die Längsachse des durch die Vorrichtung geführten Strangs 10 verlaufenden Mittelebene (Äquatorialebene). Außerdem ist in den Figuren 1 und 2 erkennbar, dass die optische Achse 25 des aus dem Transceiver 20 und der Strahlungsoptik 22 gebildeten optischen Systems senkrecht zur Längsachse des Strangs 10 liegt. Die von dem Transceiver 20 ausgesandte Terahertzstrahlung wird also durch die Strahlungsoptik 22 senkrecht auf die Längsachse des Strangs geleitet. Der Sender und Empfänger bzw. der Transceiver 20 sind weiterhin über eine Leitung 28 mit einer Auswerte- und Steuereinrichtung 30 verbunden.

Bei dem Bezugszeichen 46 ist ein zylindrisch gewölbter Reflektor für die Terahertzstrahlung gezeigt, dessen Längsachse in Richtung der Längsachse des durch die Vorrichtung geführten Strangs 10 verläuft. Der Krümmungsmittelpunkt des Reflektors 46 fällt mit dem Krümmungsmittelpunkt des zu vermessenden Strangs 10 zusammen, so dass die Brennlinie des zylindrischen Reflektors 46 mit der Längsachse des Strangs 10 zusammenfällt. Der Reflektor 46 verstärkt das Messsignal und erlaubt eine noch bessere Diskriminierung der unterschiedlichen von dem Empfänger empfangenen Messsignale.

Das mit der in Fig. 1 und Fig. 2 dargestellten erfindungsgemäßen Vorrichtung durchgeführte erfindungsgemäße Verfahren arbeitet wie folgt: Die Auswerte- und Steuereinrichtung 30 steuert über die Leitung 28 den Sender des Transceivers 20 zum Aussenden von Terahertzstrahlung 24 an. In dem gezeigten Beispiel sendet der Sender des Transceivers 20 frequenzmodulierte Dauerstrich-Terahertzstrahlung aus. Insbesondere werden ein oder mehrere Frequenz-Bursts durchfahren. Selbstverständlich ist es aber auch möglich, dass der Sender des Transceivers 20 anders modulierte Terahertzstrahlung aussendet, beispielsweise impulsmodulierte Terahertzstrahlung oder phasenmodulierte Terahertzstrahlung. Die Terahertzstrahlung 24 wird von der Strahlungsoptik 22 wie in den Fign. 1 und 2 gezeigt in senkrechter Richtung und linienförmig auf die zentrale Längsachse des Strangs 10 fokussiert, während der Strang 10 entlang seiner Längsachse durch die erfindungsgemäße Vorrichtung gefördert wird. Die Terahertzstrahlung 24 wird dabei zunächst an der dem Sender und Empfänger zugewandten Außenseite 16 der Wand 12 teilreflektiert. Die Wand 12 ist teildurchlässig für Terahertzstrahlung, wobei der die Außenseite 16 durchtretende Strahlungsanteil im weiteren Verlauf wiederum teilreflektiert wird an der Innenfläche 18 der Wand 12 bevor der wiederum verbleibende Strahlungsanteil in den Hohlraum 14 eintritt. Der in den Hohlraum 14 eintretende Strahlungsanteil wird im weiteren Verlauf wiederum teilreflektiert an der dem Eintritt in den Hohlraum gegenüberliegenden Seite der Innenfläche 18 der Wand 12 und der wiederum in die Wand 12 eintretende Strahlungsanteil wird anschließend an der dem Sender und Empfänger abgewandten Außenfläche 16 der Wand 12 teilreflektiert.

Sämtliche dieser teilreflektierten Strahlungsanteile gelangen über die Strahlungsoptik 22 zurück zu dem Empfänger des Transceivers 20 und werden von diesem in Form von Messsignalen empfangen. Der Strahlengang der von dem Strang 10 kommenden Terahertzstrahlung zurück zu dem Empfänger des Transceivers 20 ist dabei (in umgekehrter Richtung) identisch zu dem Strahlengang von dem Sender des Transceivers 20 zu dem Strang 10. Aufgrund der Frequenzmodulation der von dem Sender ausgesandten Dauerstrich-Terahertzstrahlung kann die Auswerte- und Steuereinrichtung 30 anhand der Frequenz der von dem Empfänger empfangenen Messsignalen unterscheiden, um welchen teilreflektierten Strahlungsanteil es sich jeweils handelt. Beispielsweise durch entsprechende Laufzeitmessungen können die Abstände des Transceivers 20 zu sämtlichen die Terahertzstrahlung teilreflektierenden Grenzflächen ermittelt werden. Aus diesen Daten kann die Auswerte- und Steuereinrichtung 30 beispielsweise den Außendurchmesser und den Innendurchmesser der Wand 12 des Strangs 10 und damit die Wanddicke der Wand 12 ermitteln. Der Außendurchmesser ist in den Figuren beispielhaft bei dem Bezugszeichen 40 gezeigt und die Wanddicke bei dem Bezugszeichen 42.

Aufgrund der linienförmigen Fokussierung der Terahertzstrahlung auf die zentrale Längsachse des Strangs 10 stehen sämtliche von dem Sender ausgesandten und durch die Strahlungsoptik 22 fokussierten Strahlen jeweils senkrecht auf den im Querschnitt kreisförmigen Grenzflächen. Damit ist das erfindungsgemäße Messverfahren unabhängig von einer Durchmesseränderung des Strangs 10 bzw. einzelner Grenzflächen des Strangs 10. Es muss lediglich gewährleistet sein, dass der Lienenfokus 26 weiterhin im Mittelpunkt der jeweils im Querschnitt kreisförmigen Grenzflächen liegt. Auch sind auf diese Weise aus der Vermessung von ebenen Platten an sich bekannte Auswertealgorithmen für die jeweilige Abstandsmessung einsetzbar.

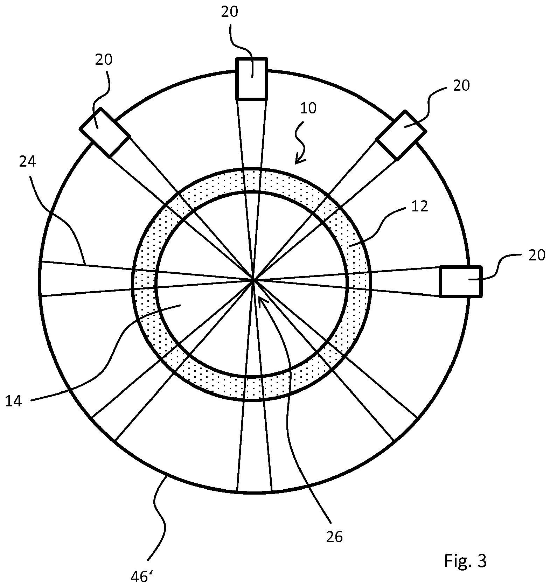

Außerdem kann mit dem in den Figuren 1 und 2 (und dem in Fig. 3) gezeigten Aufbau eine durch das Material des durch die Vorrichtung geführten Strangs 10 verursachte Laufzeitänderung der von dem Transceiver 20 ausgesandten und nach Durchstrahlen des Strangs 10 und der Reflektion an dem Reflektor 46 wieder von dem Transceiver 20 empfangenen Terahertzstrahlung bei der Bestimmung des Durchmessers und/oder der Wanddicken des Strangs 10 berücksichtigt werden, wie oben erläutert.

Dies soll nachfolgend anhand eines Beispiels erläutert werden.

Für die Laufzeit $T_R$ der Terahertzstrahlung von dem Transceiver 20 bis zum gegenüberliegen Reflektor 46 und zurück gilt ohne laufzeitverlängerndes Strangmaterial im Strahlungsweg:

$$T_R = \frac{2s}{c}$$

$s=$     *Abstand Transceiver 20 zum Reflektor 46*

$c=$     *Ausbreitungsgeschwindigkeit der Terahertzstrahlung ohne Strangmaterial, $\sim 3 \times 10^8$ m/s*

Befindet sich dagegen ein rohrförmiger Strang 10 zwischen dem Transceiver 20 und dem Reflektor 46, dann wird die Laufzeit $T_R$ der den Strang 10 auf dem Weg vom Transceiver 20 zum Reflektor 46 und zurück durchstrahlenden Strahlung um $\Delta T_R$ verlängert, weil beim Durchdringen der Wanddicken 12 die Ausbreitungsgeschwindigkeit, abhängig von den Eigenschaften des Materials wie erläutert verringert wird.

Für die Berechnung der Wanddicken $W_{d1}$ (Dicke der dem Transceiver 20 zugewandten vorderen Wand 12 bzw. Wandabschnitt 12 des Strangs 10) und $W_{d2}$ (Dicke der dem Transceiver 20 abgewandten rückseitigen Wand 12 bzw. Wandabschnitt 12 des Strangs 10) wird der Laufzeitunterschied $\Delta T_{Wd1}$ zwischen an der dem Transceiver 20 zugewandten äußeren Grenzfläche und an der dem Transceiver 20 abgewandten inneren Grenzfläche der vorderen Wand 12 des Strangs 10 reflektierter Terahertzstrahlung ermittelt, und es wird der Laufzeitunterschied $\Delta T_{Wd2}$ zwischen an der dem Transceiver 20 zugewandten inneren Grenzfläche und an der dem Transceiver 20 abgewandten äußeren Grenzfläche der rückseitigen Wand 12 des Strangs 10 reflektierter Terahertzstrahlung ermittelt. Diese Laufzeitunterschiede $\Delta T_{Wd1}$ und $\Delta T_{Wd2}$ werden für die Berechnung der Wanddicken $W_{d1}$ und $W_{d2}$ zunächst jeweils mit $\frac{1}{2}$ der Ausbreitungsgeschwindigkeit c der Terahertzstrahlung (in Luft) ohne Strang multipliziert.

Wegen der materialabhängigen, geringeren Ausbreitungsgeschwindigkeit der Terahertzstrahlung in den Wandabschnitten 12 des Strangs 10 würden sich auf diese Weise zu große Wanddickenwerte ergeben, die allerdings mit Kenntnis der durch das Strangmaterial verursachten Laufzeitänderung $\Delta T_R$ wie folgt zu korrigieren sind:

$$W_{d1} + W_{d2} = \frac{1}{2}\left(\Delta T_{wd1} + \Delta T_{wd2} - \Delta T_R\right) c$$

Für die einzelnen Wanddicken muss die Laufzeitverlängerung entsprechend anteilig abgezogen werden. Es ergibt sich für die einzelnen Wanddicken folglich:

$$W_{d1} = \frac{1}{2}\left(\Delta T_{wd1} - \frac{\Delta T_R \; x \; \Delta T_{wd1}}{\Delta T_{wd1} + \Delta T_{wd2}}\right) c$$

$$W_{d2} = \frac{1}{2}\left(\Delta T_{wd2} - \frac{\Delta T_R \; x \; \Delta T_{wd2}}{\Delta T_{wd2} + \Delta T_{wd1}}\right) c$$

In entsprechender Weise kann die durch das Strangmaterial verursachte Laufzeitänderung $\Delta T_R$ bei der Bestimmung des Durchmessers des Strangs 10 berücksichtigt werden. Für die Durchmesserbestimmung wird der Laufzeitunterschied $\Delta T_D$ zwischen an der dem Transceiver 20 zugewandten äußeren (vorderen) Grenzfläche der vorderen Wand 12 und an der dem Transceiver 20 abgewandten äußeren (rückseitigen) Grenzfläche der rückseitigen Wand 12 des Strangs 10 reflektierter Terahertzstrahlung ermittelt. Der um die Laufzeitänderung $\Delta T_R$ korrigierte Durchmesser D ergibt sich dann wie folgt:

$$D = \frac{1}{2}\left(\Delta T_D - \Delta T_R\right) c$$

Bei dem in Fig. 3 dargestellten Ausführungsbeispiel sind mehrere (vorliegend vier) Paare von Sendern und Empfängern vorgesehen, vorliegend jeweils in Form eines Transceivers 20. Die Transceiver 20 sind entlang einer Kreisbahn über den Umfang des Strangs 10 verteilt angeordnet. Natürlich könnten wiederum auch räumlich getrennte Sender und Empfänger vorgesehen sein, beispielsweise einander gegenüberliegend. Entlang dieser Kreisbahn kann ein kreiszylindrischer Reflektor 46'vorgesehen sein. Es ist jeweils eine nicht dargestellte Strahlungsoptik vorgesehen, die die von dem jeweiligen Sender ausgesandte Terahertzstrahlung wie zu den Figuren 1 bis 3 erläutert in senkrechter Richtung linienförmig auf die zentrale Längsachse des Strangs 10 fokussiert. Sämtliche dieser Transceiver 20 können dann mit einer in Fig. 3 nicht näher dargestellten Auswerte- und Steuereinrichtung in geeigneter Weise verbunden sein. Es ist auch denkbar, dass sie jeweils über eine eigene Auswerte- und Steuereinrichtung verfügen, wobei diese Auswerte- und Steuereinrichtungen dann miteinander verbunden sein können. Aus den Messdaten der verschiedenen Sender-Empfängerpaare kann dann beispielsweise eine Unrundheit des Strangs 10 bzw. einzelner Schichten des Strangs 10 ermittelt werden. Auch ist es bei mehreren Paaren von Sendern und Empfängern möglich, durch die Auswerte- und Steuereinrichtung(en) die Transceiver 20 und/oder die Strahlungsoptiken so anzusteuern, dass eine Nachführung erfolgt, die sicherstellt, dass der Fokus 26 der von den Sendern ausgesandten Terahertzstrahlung jeweils auf der zentralen Längsachse des Strangs 10 verbleibt.

Obgleich bei den anhand der Figuren erläuterten Ausführungsbeispiele eine linienförmige Fokussierung der Terahertzstrahlung auf die zentrale Längsachse des Strangs 10 beschrieben ist, wären jeweils auch andere Strahlführungen denkbar, beispielsweise eine (möglichst eng gebündelte) fächerförmige Fokussierung auf den Strang oder eine parallele Führung der Terahertzstrahlung auf den Strang.

**Patentansprüche**

1. Vorrichtung zum Messen der Wanddicke eines im Querschnitt im Wesentlichen kreisförmigen und mittels Führungsmitteln der Vorrichtung in Richtung seiner Längsachse durch die Vorrichtung geführten Rohrs (10, 10'), umfassend mindestens einen Sender (20) zum Aussenden von Terahertzstrahlung (24), wobei mindestens eine Strahlungsoptik (22) vorgesehen ist, die die von dem Sender ausgesandte Terahertzstrahlung (24) auf ein durch die Vorrichtung geführtes Rohr (10, 10') leitet, wobei mindestens einem Sender gegenüberliegend in Strahlungsrichtung der von dem mindestens einen Sender ausgesandten Terahertzstrahlung (24) hinter dem Rohr (10, 10') ein Reflektor (46, 46') für die Terahertzstrahlung (24) angeordnet ist, weiter umfassend mindestens einen Empfänger (20) zum Empfangen der von dem mindestens einen Sender ausgesandten und an dem Rohr (10, 10') und/oder an dem Reflektor (46, 46') reflektierten Terahertzstrahlung (24), und umfassend eine Auswerteeinrichtung (30), die dazu ausgebildet ist, anhand der von dem mindestens einen Empfänger empfangenen Messsignale die Wanddicke des Rohrs (10, 10') zu bestimmen, wobei die Auswerteeinrichtung (30) dazu ausgebildet ist, eine durch das Material des durch die Vorrichtung geführten Rohrs (10) verursachte Laufzeitänderung ($\Delta T_R$) der von dem mindestens einen Sender ausgesandten und nach Durchstrahlen des Rohrs (10) von dem mindestens einen Empfänger empfangenen Terahertzstrahlung (24) bei der Bestimmung der Wanddicke des Rohrs (10) zu berücksichtigen, und dabei die von den beiden von der Terahertzstrahlung durchstrahlten Wänden des Rohrs (10) verursachte Laufzeitänderung ($\Delta T_{wd1}$, $\Delta T_{wd2}$) rechnerisch anteilig zu berücksichtigen.

2. Vorrichtung nach Anspruch 1, **dadurch gekennzeichnet, dass** die Auswerteeinrichtung (30) weiterhin dazu ausgebildet ist, anhand der von dem mindestens einen Empfänger empfangenen Messsignale den Durchmesser des Rohrs (10, 10') zu bestimmen.

3. Vorrichtung nach einem der vorhergehenden Ansprüche, **dadurch gekennzeichnet, dass** die mindestens eine Strahlungsoptik (22) die von dem Sender ausgesandte Terahertzstrahlung (24) linienförmig fokussiert, derart dass der linienförmige Fokus mit der Längsachse eines durch die Vorrichtung geführten Strangs (10, 10') zusammen fällt.

4. Vorrichtung nach Anspruch 3, **dadurch gekennzeichnet, dass** die Randstrahlen der durch die mindestens eine Strahlungsoptik fokussierten Terahertzstrahlung eine Keilform bilden, wobei die Seitenflächen (17, 19) der Keilform spiegelsymmetrisch zu einer durch die Längsachse des durch die Vorrichtung geführten Rohrs (10, 10') verlaufenden Mittelebene liegen.

5. Vorrichtung nach einem der vorhergehenden Ansprüche, **dadurch gekennzeichnet, dass** die Auswerteeinrichtung (30) den Durchmesser und/oder die Wanddicke des Rohrs (10, 10') anhand einer Laufzeitmessung der von dem mindestens einen Sender ausgesandten und von dem mindestens einen Empfänger empfangenen Terahertzstrahlung (24) bestimmt.

6. Vorrichtung nach einem der vorhergehenden Ansprüche, **dadurch gekennzeichnet, dass** mehrere Paare von Sendern zum Aussenden von Terahertzstrahlung (24) und Empfängern zum Empfangen der von jeweils einem Sender ausgesandten Terahertzstrahlung (24) vorgesehen sind, wobei für jeden Sender eine Strahlungsoptik (22) vorgesehen ist, und wobei die Sender und Empfänger paarweise über den Umfang des durch die Vorrichtung geführten Rohrs (10, 10') verteilt angeordnet sind.

7. Vorrichtung nach Anspruch 6, **dadurch gekennzeichnet, dass** die Auswerteeinrichtung (30) dazu ausgebildet ist, anhand der von den Empfängern jeweils empfangenen Messsignale eine Unrundheit des Rohrs (10, 10') zu ermitteln und/oder einzelne oder mehrere Sender und Empfänger oder Strahlungsoptiken (22) so nachzuführen, dass die von den Sendern ausgesandte Terahertzstrahlung (24) jeweils linienförmig auf die Längsachse eines durch die Führungsmittel geführten Rohrs (10, 10') fokussiert bleibt.

8. Vorrichtung nach einem der vorhergehenden Ansprüche, **dadurch gekennzeichnet, dass** mindestens ein Paar aus einem Sender zum Aussenden von Terahertzstrahlung (24) und einem Empfänger zum Empfangen der von dem Sender ausgesandten Terahertzstrahlung (24) mittels einer Dreheinrichtung während eines Messvorgangs drehbar um die Längsachse des Rohrs (10, 10') ist, vorzugsweise entlang einer Kreisbahn.

9. Vorrichtung nach einem der vorhergehenden Ansprüche, **dadurch gekennzeichnet, dass** der Reflektor (46, 46') ein zylindrisch gewölbter Reflektor (46, 46')ist, dessen Längsachse in Richtung der Längsachse eines durch die Vorrichtung geführten Rohrs (10, 10') verläuft.

10. Vorrichtung nach einem der vorhergehenden Ansprüche, **dadurch gekennzeichnet, dass** die Auswerteeinrichtung dazu ausgebildet ist, die Wanddicke $W_{d1}$ der dem mindestens einen Empfänger zugewandten Wand des Rohrs und/oder die Wanddicke $W_{d2}$ der dem mindestens einen Empfänger abgewandten Wand des Rohrs nach folgenden Formeln zu bestimmen:

$$W_{d1} = \frac{1}{2}\left(\Delta T_{wd1} - \frac{\Delta T_R \; x \; \Delta T_{wd1}}{\Delta T_{wd1} + \Delta T_{wd2}}\right) c$$

$$W_{d2} = \frac{1}{2}\left(\Delta T_{wd2} - \frac{\Delta T_R \; x \; \Delta T_{wd2}}{\Delta T_{wd2} + \Delta T_{wd1}}\right) c$$

mit:

$\Delta T_{wd1}$ Laufzeitunterschied zwischen an der dem mindestens einen Empfänger zugewandten äußeren Grenzfläche und an der dem mindestens einen Empfänger abgewandten inneren Grenzfläche der dem mindestens einen Empfänger zugewandten Wand des Rohrs reflektierter Terahertzstrahlung,

$\Delta T_{wd2}$ Laufzeitunterschied zwischen an der dem mindestens einen Empfänger zugewandten inneren Grenzfläche und an der dem mindestens einen Empfänger abgewandten äußeren Grenzfläche der dem mindestens einen Empfänger abgewandten Wand des Rohrs reflektierter Terahertzstrahlung,

$\Delta T_R$ Durch das Material des durch die Vorrichtung geführten Rohrs verursachte Laufzeitänderung der von dem mindestens einen Sender ausgesandten und nach Durchstrahlen des Rohrs von dem mindestens einen Empfänger empfangenen Terahertzstrahlung,

$c$ Ausbreitungsgeschwindigkeit der Terahertzstrahlung in Luft

11. Verfahren zum Messen der Wanddicke eines im Querschnitt im Wesentlichen kreisförmigen Rohrs (10, 10') in einer Vorrichtung, bei dem ein Rohr (10, 10') mittels Führungsmitteln der Vorrichtung in Richtung seiner Längsachse durch die Vorrichtung geführt wird, bei dem weiterhin mindestens ein Sender Terahertzstrahlung (24) aussendet, wobei die von dem mindestens einen Sender ausgesandte Terahertzstrahlung (24) durch mindestens eine Strahlungsoptik (22) auf ein durch die Vorrichtung geführtes Rohr (10, 10') geleitet wird, wobei die von mindestens einem Sender ausgesandte Terahertzstrahlung (24) von dem Rohr und/oder mindestens einem gegenüberliegend zu dem mindestens einen Sender und in Strahlungsrichtung der ausgesandten Terahertzstrahlung (24) hinter dem Rohr (10, 10') liegenden Reflektor (46, 46') reflektiert und von mindestens einem Empfänger empfangen wird, und bei dem anhand der von dem mindestens einen Empfänger empfangenen Messsignale die Wanddicke des Rohrs (10, 10') bestimmt wird, wobei eine durch das Material des durch die Vorrichtung geführten Rohrs (10) verursachte Laufzeitänderung ($\Delta T_R$) der von dem mindestens einen Sender ausgesandten und nach Durchstrahlen des Rohrs (10) von dem mindestens einen Empfänger empfangenen Terahertzstrahlung (24) bei der Bestimmung der Wanddicke des Rohrs (10) berücksichtigt wird, wobei die von den beiden von der Terahertzstrahlung durchstrahlten Wänden des Rohrs (10) verursachte Laufzeitänderung ($\Delta Twd1$, $\Delta Twd2$) rechnerisch anteilig berücksichtigt wird.

**12.** Verfahren nach Anspruch 11, **dadurch gekennzeichnet, dass** anhand der von dem mindestens einen Empfänger empfangenen Messsignale weiterhin der Durchmesser des Rohrs (10, 10') bestimmt wird.

**13.** Verfahren nach einem der Ansprüche 11 oder 12, **dadurch gekennzeichnet, dass** die von dem mindestens einen Sender ausgesandte Terahertzstrahlung (24) durch mindestens eine Strahlungsoptik (22) linienförmig fokussiert wird, derart dass der linienförmige Fokus mit der Längsachse des durch die Vorrichtung geführten Strangs (10, 10') zusammen fällt.

**14.** Verfahren nach Anspruch 13, **dadurch gekennzeichnet, dass** die Randstrahlen der durch die mindestens eine Strahlungsoptik fokussierten Terahertzstrahlung eine Keilform bilden, wobei die Seitenflächen der Keilform spiegelsymmetrisch zu einer durch die Längsachse des durch die Vorrichtung geführten Rohrs (10, 10') verlaufenden Mittelebene liegen.

**15.** Verfahren nach einem der Ansprüche 11 bis 14, **dadurch gekennzeichnet, dass** der Durchmesser und/oder die Wanddicke des Rohrs (10, 10') anhand einer Laufzeitmessung der von dem mindestens einen Sender ausgesandten und von dem mindestens einen Empfänger empfangenen Terahertzstrahlung (24) bestimmt wird.

**16.** Verfahren nach einem der Ansprüche 11 bis 15, **dadurch gekennzeichnet, dass** von mehreren über den Umfang des durch die Vorrichtung geführten Rohrs verteilt angeordneten Sendern Terahertzstrahlung (24) ausgesandt wird, wobei die von jedem Sender ausgesandte Terahertzstrahlung (24) jeweils auf ein durch die Vorrichtung geführtes Rohr (10, 10') geleitet wird, und dass von mehreren ebenfalls über den Umfang des durch die Vorrichtung geführten Rohrs (10, 10') verteilt angeordneten und paarweise jeweils einem Sender zugeordneten Empfängern von dem jeweils zugeordneten Sender ausgesandte Terahertzstrahlung (24) empfangen wird.

**17.** Verfahren nach Anspruch 16, **dadurch gekennzeichnet, dass** anhand der von den Sendern jeweils empfangenen Messsignale eine Unrundheit des Rohrs (10, 10') ermittelt wird und/oder einzelne oder mehrere Sender und Empfänger oder Strahlungsoptiken (22) zum Fokussieren der von den Sendern ausgesandten Terahertzstrahlung (24) so nachgeführt werden, dass die von den Sendern ausgesandte Terahertzstrahlung (24) jeweils linienförmig auf die Längsachse eines durch die Vorrichtung geführten Rohrs (10, 10') fokussiert bleibt.

**18.** Verfahren nach einem der Ansprüche 11 bis 17, **dadurch gekennzeichnet, dass** mindestens ein Paar aus einem Sender zum Aussenden von Terahertzstrahlung (24) und einem Empfänger zum Empfangen der von dem Sender ausgesandten Terahertzstrahlung (24) während des Messvorgangs um die Längsachse des Rohrs (10, 10') gedreht wird, vorzugsweise entlang einer Kreisbahn.

**19.** Verfahren nach einem der Ansprüche 11 bis 18, **dadurch gekennzeichnet, dass** die Wanddicke $W_{d1}$ der dem mindestens einen Empfänger zugewandten Wand des Rohrs und/oder die Wanddicke $W_{d2}$ der dem mindestens einen Empfänger abgewandten Wand des Rohrs nach folgenden Formeln bestimmt wird:

$$W_{d1} = \frac{1}{2}\left(\Delta T_{wd1} - \frac{\Delta T_R \; x \; \Delta T_{wd1}}{\Delta T_{wd1} + \Delta T_{wd2}}\right) c$$

$$W_{d2} = \frac{1}{2}\left(\Delta T_{wd2} - \frac{\Delta T_R \; x \; \Delta T_{wd2}}{\Delta T_{wd2} + \Delta T_{wd1}}\right) c$$

mit:

$\Delta T_{wd1}$ Laufzeitunterschied zwischen an der dem mindestens einen Empfänger zugewandten äußeren Grenzfläche und an der dem mindestens einen Empfänger abgewandten inneren Grenzfläche der dem mindestens einen Empfänger zugewandten Wand des Rohrs reflektierter Terahertzstrahlung,

$\Delta T_{wd2}$ Laufzeitunterschied zwischen an der dem mindestens einen Empfänger zugewandten inneren Grenzfläche und an der dem mindestens einen Empfänger abgewandten äußeren Grenzfläche der dem mindestens einen Empfänger abgewandten Wand des Rohrs reflektierter Terahertzstrahlung,

$\Delta T_R$ Durch das Material des durch die Vorrichtung geführten Rohrs verursachte Laufzeitänderung der von dem mindestens einen Sender ausgesandten und nach Durchstrahlen des Rohrs von dem mindestens einen Empfänger empfangenen Terahertzstrahlung,

$c$ Ausbreitungsgeschwindigkeit der Terahertzstrahlung in Luft.

## Claims

1. A device for measuring the wall thickness of a tube (10, 10') that has a cross-section which is substantially circular and is guided by guide means of the device in the direction of its longitudinal axis through the device, comprising at least one transmitter (20) for emitting terahertz radiation (24), wherein at least one radiation optical system (22) is provided that conducts the terahertz radiation (24) emitted by the transmitter to a tube (10, 10') guided through the device, wherein a reflector (46, 46') for the terahertz radiation (24) is arranged behind the tube (10, 10') opposite at least one transmitter in the radiation direction of the terahertz radiation (24) emitted by the at least one transmitter, further comprising at least one receiver (20) for receiving the terahertz radiation (24) emitted by the at least one transmitter and reflected at the tube (10, 10') and/or at the reflector (46, 46'), and comprising an evaluating apparatus (30) that is designed to determine the wall thickness of the tube (10, 10') using the measuring signals received by the at least one receiver, wherein the evaluating apparatus (30) is designed to take into account a runtime change ($\Delta T_R$), caused by the material of the tube (10) guided through the device, of the terahertz radiation (24) emitted by the at least one transmitter and received by the at least one receiver after transilluminating the tube (10) when determining the wall thickness of the tube (10), and in so doing to proportionately factor in the runtime change ($\Delta T_{wd1}$, $\Delta T_{wd2}$) caused by the two walls of the tube (10) transilluminated by the terahertz radiation.

2. The device according to claim 1, **characterized in that** the evaluating apparatus (30) is furthermore designed to determine the diameter of the tube (10, 10') using the measuring signals received by the at least one receiver.

3. The device according to one of the preceding claims, **characterized in that** the at least one radiation optical system (22) linearly focuses the terahertz radiation (24) emitted by the transmitter such that the linear focus coincides with the longitudinal axis of a strand (10, 10') guided through the device.

4. The device according to claim 3, **characterized in that** the marginal rays of the terahertz radiation focused by the at least one radiation optical system form a wedge shape, wherein the lateral surfaces (17, 19) of the wedge shape are mirror-symmetrical to a midplane running through the longitudinal axis of the tube (10, 10') guided through the device.

5. The device according to one of the preceding claims, **characterized in that** the evaluating device (30) determines the diameter and/or the wall thickness of the tube (10, 10') using a runtime measurement of the terahertz radiation (24) emitted by the at least one transmitter and received by the at least one receiver.

6. The device according to one of the preceding claims, **characterized in that** several pairs of transmitters for emitting terahertz radiation (24) and receivers for receiving the terahertz radiation (24) emitted by one transmitter in each case are provided, wherein a radiation optical system (22) is provided for each transmitter, and wherein the transmitters and receivers are arranged distributed in pairs over the circumference of the tube (10, 10') guided through the device.

7. The device according to claim 6, **characterized in that** the evaluation apparatus (30) is designed to ascertain an out-of-roundness of the tube (10, 10') using the measuring signals received by the receivers in each case, and/or to track individual or several transmitters and receivers or radiation optical systems (22) so that the terahertz radiation (24) emitted by the transmitters remains linearly focused on the longitudinal axis of a tube (10, 10') guided by the guide means in each case.

8. The device according to one of the preceding claims, **characterized in that** at least one pair consisting of a transmitter for emitting terahertz radiation (24) and a receiver for receiving the terahertz radiation (24) emitted by the transmitter is rotatable by a rotating apparatus about the longitudinal axis of the tube (10, 10'), preferably along a circular path, during a measuring process.

9. The device according to one of the preceding claims, **characterized in that** the reflector (46, 46') is a cylindrically curved reflector (46, 46'), the longitudinal axis of which runs in the direction of the longitudinal axis of a tube (10, 10') guided through the device.

10. The device according to one of the preceding claims, **characterized in that** the evaluating apparatus is designed to determine the wall thickness $W_{d1}$ of the wall of the tube facing the at least one receiver, and/or the wall thickness $W_{d2}$ of the wall of the tube facing away from the at least one receiver, according to the following formulas:

$$W_{d1} = \frac{1}{2}\left(\Delta T_{wd1} - \frac{\Delta T_R \; x \; \Delta T_{wd1}}{\Delta T_{wd1} + \Delta T_{wd2}}\right) c$$

$$W_{d2} = \frac{1}{2}\left(\Delta T_{wd2} - \frac{\Delta T_R \; x \; \Delta T_{wd2}}{\Delta T_{wd2} + \Delta T_{wd1}}\right) c$$

where:

$\Delta T_{wd1}$ is the runtime difference between terahertz radiation reflected at the outer boundary surface facing the at least one receiver and at the inner boundary surface facing away from the at least one receiver of the wall of the tube facing the at least one receiver,

$\Delta T_{wd2}$ is the runtime difference between terahertz radiation reflected at the inner boundary surface facing the at least one receiver and at the at the outer boundary surface facing away from the at least one receiver of the wall of the tube facing away from the at least one receiver,

$\Delta T_R$ is the runtime change caused by the material of the tube guided through the device of the terahertz radiation emitted by the at least one transmitter and received by the at least one receiver after transilluminating the tube,

$c$ is the propagation speed of the terahertz radiation in air.

11. A method for measuring the wall thickness of a tube (10, 10') with a substantially circular cross-section in a device, wherein a tube (10, 10') is guided through the device by guide means of the device in the direction of its longitudinal axis, wherein furthermore at least one transmitter emits terahertz radiation (24), wherein the terahertz radiation (24) emitted by the at least one transmitter is conducted by at least one radiation optical system (22) toward a tube (10, 10') guided through the device, wherein the terahertz radiation (24) emitted by the at least one transmitter is reflected by the tube and/or at least one reflector (46, 46') lying opposite the at least one transmitter and behind the tube (10, 10') in the radiation direction of the emitted terahertz radiation (24), and is received by at least one receiver, and wherein the wall thickness of the tube (10, 10') is determined using the measuring signals received by the at least one receiver, wherein a runtime change ($\Delta T_R$), caused by the material of the tube (10) guided through the device, of the terahertz radiation (24) emitted by the at least one transmitter and received by the at least one receiver after transilluminating the tube (10) is taken into account when determining the wall thickness of the tube (10), wherein the runtime change ($\Delta T_{wd1}, \Delta T_{wd2}$) caused by the two walls of the tube (10) transilluminated by the terahertz radiation is proportionately factored in.

12. A method according to claim 11, **characterized in that** furthermore, the diameter of the tube (10, 10') is determined using the measuring signals received by the at least one receiver.

13. The method according to one of claims 11 or 12, **characterized in that** the terahertz radiation (24) emitted by the at least one transmitter is linearly focused by at least one radiation optical system (22) such that the linear focus coincides with the longitudinal axis of the strand (10, 10') guided through the device.

14. The method according to claim 13, **characterized in that** the marginal rays of the terahertz radiation focused by the at least one radiation optical system form a wedge shape, wherein the lateral surfaces of the wedge shape are mirror-symmetrical to a midplane running through the longitudinal axis of the tube (10, 10') guided through the device.

15. The method according to one of claims 11 to 14, **characterized in that** the diameter and/or the wall thickness of the tube (10, 10') are/is determined using a runtime measurement of the terahertz radiation (24) emitted by the at least one transmitter and received by the at least one receiver.

16. The method according to one of claims 11 to 15, **characterized in that** terahertz radiation (24) is emitted by a plurality of transmitters arranged distributed over the perimeter of the tube guided through the device, wherein the terahertz radiation (24) emitted by each transmitter is directed in each case toward a tube (10, 10') guided through the device, and terahertz radiation (24) emitted by each associated transmitter is received by a plurality of receivers that are each associated with a transmitter as a pair, and are also arranged distributed over the perimeter of the tube (10, 10') guided through the device.

17. The method according to claim 16, **characterized in that** an out-of-roundness of the tube (10, 10') is determined using the measuring signals received from the transmitters in each case, and/or individual or several transmitters and receivers or radiation optical systems (22) are tracked to focus the terahertz radiation (24) emitted by the transmitters so that the terahertz radiation (24) emitted by the transmitters remains linearly focused in each case on the longitudinal axis of a tube (10, 10') guided through the device.

18. The method according to one of claims 11 to 17, **characterized in that** at least one pair consisting of a transmitter for emitting terahertz radiation (24) and a receiver for receiving the terahertz radiation (24) emitted by the transmitter is rotated about the longitudinal axis of the tube (10, 10'), preferably along a circular path, during the measuring process.

19. The method according to one of claims 11 to 18, **characterized in that** the wall thickness $W_{d1}$ of the wall of the tube facing the at least one receiver, and/or the wall thickness $W_{d2}$ of the wall of the tube facing away from the at least one receiver, is determined according to the following formulas:

$$W_{d1} = \frac{1}{2}\left(\Delta T_{wd1} - \frac{\Delta T_R \; x \; \Delta T_{wd1}}{\Delta T_{wd1} + \Delta T_{wd2}}\right) c$$

$$W_{d2} = \frac{1}{2}\left(\Delta T_{wd2} - \frac{\Delta T_R \; x \; \Delta T_{wd2}}{\Delta T_{wd2} + \Delta T_{wd1}}\right) c$$

where:

$\Delta T_{wd1}$ is the runtime difference between terahertz radiation reflected at the outer boundary surface facing the at least one receiver and at the inner boundary surface facing away from the at least one receiver of the wall of the tube facing the at least one receiver,
$\Delta T_{wd2}$ is the runtime difference between terahertz radiation reflected at the inner boundary surface facing the at least one receiver and at the outer boundary surface facing away from the at least one receiver of the wall of the tube facing away from the at least one receiver,
$\Delta T_R$ is the runtime change caused by the material of the tube guided through the device of the terahertz radiation emitted by the at least one transmitter and received by the at least one receiver after transilluminating the tube,
$c$ is the propagation speed of the terahertz radiation in air.

**Revendications**

1. Dispositif de mesure de l'épaisseur de paroi d'un tube (10, 10') sensiblement circulaire dans la section transversale et guidé à travers le dispositif dans le sens de son axe longitudinal par des moyens de guidage du dispositif, comprenant au moins un émetteur (20) destiné à émettre un rayonnement térahertz (24), dans lequel au moins une optique de rayonnement (22) est prévue, qui dirige le rayonnement térahertz (24) émis par l'émetteur sur un tube (10, 10') guidé à travers le dispositif, dans lequel un réflecteur (46, 46') du rayonnement térahertz (24) est disposé derrière le tube (10, 10') en vis-à-vis d'au moins un émetteur dans le sens du rayonnement du rayonnement térahertz (24) émis par ledit émetteur au moins, comprenant encore au moins un récepteur (20) destiné à recevoir le rayonnement térahertz (24) émis par ledit émetteur au moins et réfléchi sur le tube (10, 10') et/ou sur le réflecteur (46, 46'), et comprenant une unité d'analyse (30), qui est conçue de manière à déterminer l'épaisseur de paroi du tube (10, 10') à l'aide des signaux de mesure reçus par ledit récepteur au moins, dans lequel l'unité d'analyse (30) est conçue de manière à prendre en considération une variation du temps de propagation ($\Delta T_R$) du rayonnement

térahertz (24) émis par ledit émetteur au moins et reçu par ledit récepteur au moins après l'irradiation du tube (10) lors de la détermination de l'épaisseur de paroi du tube (10), cette variation étant causée par le matériau du tube (10) guidé à travers le dispositif, et à prendre en compte proportionnellement par calcul la variation du temps de propagation ($\Delta T_{wd1}$, $\Delta T_{wd2}$) causée par les deux parois du tube (10) irradiées par le rayonnement térahertz.

2. Dispositif selon la revendication 1, **caractérisé en ce que** l'unité d'analyse (30) est conçue également de manière à déterminer le diamètre du tube (10, 10') à l'aide des signaux de mesure reçus par ledit récepteur au moins.

3. Dispositif selon l'une des revendications précédentes, **caractérisé en ce que** ladite optique de rayonnement (22) au moins focalise sous forme linéaire le rayonnement térahertz (24) émis par l'émetteur, de sorte que la focalisation linéaire coïncide avec l'axe longitudinal d'une barre (10, 10') guidée à travers le dispositif.

4. Dispositif selon la revendication 3, **caractérisé en ce que** les rayons périphériques du rayonnement térahertz focalisé par ladite optique de rayonnement au moins décrivent un cône, dans lequel les faces latérales (17, 19) du cône se situent symétriquement par rapport à un plan médian s'étendant selon l'axe longitudinal du tube (10, 10') guidé à travers le dispositif.

5. Dispositif selon l'une des revendications précédentes, **caractérisé en ce que** l'unité d'analyse (30) détermine le diamètre et/ou l'épaisseur de paroi du tube (10, 10') à l'aide d'une mesure du temps de propagation du rayonnement térahertz (24) émis par ledit émetteur au moins et reçu par ledit récepteur au moins.

6. Dispositif selon l'une des revendications précédentes, **caractérisé en ce que** plusieurs paires d'émetteurs destinés à émettre un rayonnement térahertz (24) et de récepteurs destinés à recevoir le rayonnement térahertz (24) émis respectivement par un émetteur sont prévues, dans lequel une optique de rayonnement (22) est prévue pour chaque émetteur, et dans lequel les émetteurs et les récepteurs sont disposés par paire de façon à être répartis sur le pourtour du tube (10, 10') guidé à travers le dispositif.

7. Dispositif selon la revendication 6, **caractérisé en ce que** l'unité d'analyse (30) est conçue de manière à évaluer un faux-rond du tube (10, 10') à l'aide des signaux de mesure reçus respectivement par les récepteurs et/ou à asservir isolément ou à plusieurs les émetteurs et les récepteurs ou les optiques de rayonnement (22), de façon à ce que le rayonnement térahertz (24) émis par les émetteurs reste respectivement focalisé sous forme linéaire sur l'axe longitudinal d'un tube (10, 10') guidé par les moyens de guidage.

8. Dispositif selon l'une des revendications précédentes, **caractérisé en ce qu'**au moins une paire constituée d'un émetteur destiné à émettre un rayonnement térahertz (24) et d'un récepteur destiné à recevoir le rayonnement térahertz (24) émis par l'émetteur est orientable autour de l'axe longitudinal du tube (10, 10'), de préférence en suivant une trajectoire circulaire, à l'aide d'un moyen de pivotement durant un processus de mesure.

9. Dispositif selon l'une des revendications précédentes, **caractérisé en ce que** le réflecteur (46, 46') est un réflecteur (46, 46') présentant une courbure cylindrique, dont l'axe longitudinal s'étend en direction de l'axe longitudinal d'un tube (10, 10') guidé à travers le dispositif.

10. Dispositif selon l'une des revendications précédentes, **caractérisé en ce que** l'unité d'analyse est conçue de manière à déterminer l'épaisseur de paroi $W_{d1}$ de la paroi du tube tournée vers ledit récepteur au moins et/ou l'épaisseur de paroi $W_{d2}$ de la paroi du tube opposée audit récepteur au moins d'après les formules suivantes :

$$W_{d1} = \frac{1}{2}\left(\Delta T_{wd1} - \frac{\Delta T_R \, x \, \Delta T_{wd1}}{\Delta T_{wd1} + \Delta T_{wd2}}\right)$$

$$W_{d2} = \frac{1}{2}\left(\Delta T_{wd2} - \frac{\Delta T_R \, x \, \Delta T_{wd2}}{\Delta T_{wd2} + \Delta T_{wd1}}\right)$$

avec :

$\Delta T_{wd1}$ : différence du temps de propagation entre le rayonnement térahertz réfléchi sur la surface de séparation extérieure tournée vers ledit récepteur au moins et sur la surface de séparation intérieure opposée audit récepteur au moins de la paroi du tube tournée vers ledit récepteur au moins,

$\Delta T_{wd2}$ : différence du temps de propagation entre le rayonnement térahertz réfléchi sur la surface de séparation intérieure tournée vers ledit récepteur au moins et sur la surface de séparation extérieure opposée audit récepteur au moins de la paroi du tube opposée audit récepteur au moins,

$\Delta T_R$ : variation du temps de propagation du rayonnement térahertz émis par ledit émetteur au moins et reçu par ledit récepteur au moins après l'irradiation du tube, cette variation étant causée par le matériau du tube guidé à travers le dispositif,

c : vitesse de propagation du rayonnement térahertz dans l'air.

11. Procédé de mesure de l'épaisseur de paroi d'un tube (10, 10') sensiblement circulaire dans la section transversale à l'intérieur d'un dispositif, lors duquel un tube (10, 10') est guidé à travers le dispositif dans le sens de son axe longitudinal par des moyens de guidage du dispositif, lors duquel en outre au moins un émetteur émet un rayonnement térahertz (24), dans lequel le rayonnement térahertz (24) émis par ledit émetteur au moins est dirigé sur un tube (10, 10') guidé à travers le dispositif par au moins une optique de rayonnement (22), dans lequel le rayonnement térahertz (24) émis par ledit émetteur au moins est réfléchi par le tube et/ou par au moins un réflecteur (46, 46') situé derrière le tube (10, 10') en vis-à-vis dudit émetteur au moins et dans le sens du rayonnement du rayonnement térahertz (24) émis et est reçu par au moins un récepteur, et lors duquel l'épaisseur de paroi du tube (10, 10') est déterminée à l'aide des signaux de mesure reçus par ledit récepteur au moins, dans lequel une variation du temps de propagation ($\Delta T_R$) du rayonnement térahertz (24) émis par ledit émetteur au moins et reçu par ledit récepteur au moins après l'irradiation du tube (10) est prise en considération lors de la détermination de l'épaisseur de paroi du tube, cette variation étant causée par le matériau du tube (10) guidé à travers le dispositif, dans lequel la variation du temps de propagation ($\Delta T_{wd1}$, $\Delta T_{Wd2}$) causée par les deux parois du tube (10) irradiées par le rayonnement térahertz est prise en compte proportionnellement par calcul.

12. Procédé selon la revendication 11, **caractérisé en ce que** le diamètre du tube (10, 10') est également déterminé à l'aide des signaux de mesure reçus par ledit récepteur au moins.

13. Procédé selon l'une des revendications 11 ou 12, **caractérisé en ce que** le rayonnement térahertz (24) émis par ledit émetteur au moins est focalisé sous forme linéaire par au moins une optique de rayonnement (22), de sorte que la focalisation linéaire coïncide avec l'axe longitudinal de la barre (10, 10') guidée à travers le dispositif.

14. Procédé selon la revendication 13, **caractérisé en ce que** les rayons périphériques du rayonnement térahertz focalisé par ladite optique de rayonnement au moins décrivent un cône, dans lequel les faces latérales du cône se situent symétriquement par rapport à un plan médian s'étendant selon l'axe longitudinal du tube (10, 10') guidé à travers le dispositif.

15. Procédé selon l'une des revendications 11 à 14, **caractérisé en ce que** le diamètre et/ou l'épaisseur de paroi du tube (10, 10') sont déterminés à l'aide d'une mesure du temps de propagation du rayonnement térahertz (24) émis par ledit émetteur au moins et reçu par ledit récepteur au moins.

16. Procédé selon l'une des revendications 11 à 15, **caractérisé en ce qu'**un rayonnement térahertz (24) est émis par plusieurs émetteurs disposés de façon à être répartis sur le pourtour du tube guidé à travers le dispositif, dans lequel le rayonnement térahertz (24) émis par chaque émetteur est dirigé sur un tube (10, 10') guidé à travers le dispositif, et que plusieurs récepteurs également disposés de façon à être répartis sur le pourtour du tube (10, 10') guidé à travers le dispositif et associés respectivement par paire à un émetteur reçoivent un rayonnement térahertz (24) émis par ledit émetteur respectivement associé.

17. Procédé selon la revendication 16, **caractérisé en ce qu'**un faux-rond du tube (10, 10') est évalué à l'aide des signaux de mesure reçus respectivement par les émetteurs et/ou que les émetteurs et les récepteurs ou les optiques de rayonnement (22) destinées à focaliser le rayonnement térahertz (24) émis par les émetteurs sont asservis isolément ou à plusieurs, de façon à ce que le rayonnement térahertz (24) émis par les émetteurs reste respectivement focalisé sous forme linéaire sur l'axe longitudinal d'un tube (10, 10') guidé à travers le dispositif.

18. Procédé selon l'une des revendications 11 à 17, **caractérisé en ce qu'**au moins une paire constituée d'un émetteur destiné à émettre un rayonnement térahertz (24) et d'un récepteur destiné à recevoir le rayonnement térahertz (24) émis par l'émetteur est mise en rotation autour de l'axe longitudinal du tube (10, 10'), de préférence en suivant une trajectoire circulaire, durant le processus de mesure.

**19.** Procédé selon l'une des revendications 11 à 18, **caractérisé en ce que** l'épaisseur de paroi $W_{d1}$ de la paroi du tube tournée vers ledit récepteur au moins et/ou l'épaisseur de paroi $W_{d2}$ de la paroi du tube opposée audit récepteur sont déterminées au moins d'après les formules suivantes :

$$W_{d1} = \frac{1}{2}\left(\Delta T_{wd1} - \frac{\Delta T_R \; x \; \Delta T_{wd1}}{\Delta T_{wd1} + \Delta T_{wd2}}\right)$$

$$W_{d2} = \frac{1}{2}\left(\Delta T_{wd2} - \frac{\Delta T_R \; x \; \Delta T_{wd2}}{\Delta T_{wd2} + \Delta T_{wd1}}\right)$$

avec :

$\Delta T_{wd1}$ : différence du temps de propagation entre le rayonnement térahertz réfléchi sur la surface de séparation extérieure tournée vers ledit récepteur au moins et sur la surface de séparation intérieure opposée audit récepteur au moins de la paroi du tube tournée vers ledit récepteur au moins,

$\Delta T_{wd2}$ : différence du temps de propagation entre le rayonnement térahertz réfléchi sur la surface de séparation intérieure tournée vers ledit récepteur au moins et sur la surface de séparation extérieure opposée audit récepteur au moins de la paroi du tube opposée audit récepteur au moins,

$\Delta T_R$ : variation du temps de propagation du rayonnement térahertz émis par ledit émetteur au moins et reçu par ledit récepteur au moins après l'irradiation du tube, cette variation étant causée par le matériau du tube guidé à travers le dispositif,

c : vitesse de propagation du rayonnement térahertz dans l'air.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7933027 B1
- US 2010280779 A1
- US 2009225313 A1
- JP 2002243416 A
- US 2014332687 A1
- US 2012307258 A1